(19) Europäisches Patentamt
European Patent Office
Office européen des brevets

(11) EP 3 023 451 A1

(12) **EUROPEAN PATENT APPLICATION**
published in accordance with Art. 153(4) EPC

(43) Date of publication:
**25.05.2016 Bulletin 2016/21**

(21) Application number: **14826283.5**

(22) Date of filing: **17.07.2014**

(51) Int Cl.:
***C08J 5/18*** *(2006.01)*

(86) International application number:
**PCT/JP2014/069100**

(87) International publication number:
**WO 2015/008841 (22.01.2015 Gazette 2015/03)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **19.07.2013 JP 2013150892**

(71) Applicant: **Mitsui Chemicals, Inc.**
**Tokyo 105-7117 (JP)**

(72) Inventors:
- **NISHIKAWA, Shigeo**
  **Nagoya-shi**
  **Aichi 457-8522 (JP)**
- **YOSHIDA, Mitsunobu**
  **Sodegaura-shi**
  **Chiba 299-0265 (JP)**

(74) Representative: **Hoffmann Eitle**
**Patent- und Rechtsanwälte PartmbB**
**Arabellastraße 30**
**81925 München (DE)**

# (54) CRYSTALLINE POLYMER FILM AND METHOD FOR MANUFACTURING SAME

(57) A crystallized polymer film including a polymer (A) that has a weight-average molecular weight of from 50,000 to 1,000,000 and a crystallization half time at the temperature at which the polymer crystallizes fastest in a range of from 180 seconds to 900 seconds; having a crystallinity of from 20% to 80% as obtained by a DSC method; and having a difference between a total haze and an internal haze of 0.8% or less in a case in which the total haze and the internal haze are measured at 25°C in accordance with JIS-K7105.

EP 3 023 451 A1

## Description

### Technical Field

The present invention relates to a crystallized polymer film and a method for producing the film.

### Background Art

Films that include a polymer have been widely used as, for example, packaging materials (see, for example, Japanese Patent Application Laid-Open (JP-A) No. 2012-180512) and optical materials (see, for example, JP-A No. H05-152638).

The films are produced by molding the polymer by, for example, an extrusion method and a stretching method. Thus, force applied to the polymer during molding may remain in the films, and after molding, the films may change in dimension with, for example, temperature conditions.

To suppress the dimensional change in the films, a method for hardening the films by partially crystallizing a material of the films or the polymer in the films is known (see, for example, JP-ANo. 2011-162713).

A method for producing a piezoelectric material by controlling crystallization of a certain polymer is also known (see, for example, JP-A No. 2012-235086).

## SUMMARY OF INVENTION

### Problem to be Solved by the Invention

In the above patent document (JP-A No. 2012-235086), after molding into a film, a polymer in the film is heated to a temperature near the crystallization temperature of the polymer, for crystallization of the polymer in the film (the step is hereinafter also referred to as "crystallization step" or "annealing step").

In the crystallization step (annealing step), a principal plane of the film is often contacted with a heating member such as a roll in order to heat the film and maintain the shape of the film. In the crystallization step, it is necessary to heat the film to a temperature at or above the glass transition temperature of the polymer, for crystallization of the polymer.

Therefore, irregularities in the surface of the heating member are transferred to the principal plane of the film, and thus the film crystallized in the crystallization step tends to have the principal plane having non-uniform irregularities therein. Then, the irregularities in the surface of the film are likely to lead to increased surface haze (sometimes referred to as "external haze") of the film.

It has been found that problems with the irregularities in the surface of the film (i.e., the surface haze of the film) cannot be readily solved by reducing the irregularities in the surface of the heating member that is contacted with the principal plane of the film in the crystallization step.

Films that include a polymer may also be required to have more uniform haze across the surface of the film.

Now, hazes (total haze, surface haze, and internal haze) for films will be described.

The total haze represents the sum of the surface haze and the internal haze. As used herein, the surface haze mainly depends on irregularities in a surface of films, while the internal haze depends on crystalline state (density crystalline structure) in films.

A uniform internal haze is relatively readily created across a surface of films by controlling, for example, the crystallinity of the films.

In contrast, it is difficult to create a uniform surface haze across a surface of films, because it is difficult to mold the films under uniform conditions across the surface of the films, and particularly, it is difficult to apply a uniform force across the surface of the films during molding.

Therefore, for increasing the uniformity of the total haze across a surface of polymer films (films) (hereinafter also referred to as "uniformity across a surface"), it is important to reduce the surface haze.

The invention has been developed in view of the foregoing and is directed to achieving the following object.

It is an object of the invention to provide a crystallized polymer film having reduced surface haze and a method for producing the film.

### Means of Solving the Problem

The inventors of the invention have found that selection of a polymer used for a film from polymers having a predetermined crystallization rate (and preferably, use, in crystallization, of a heating member having a contact surface that permits enhanced releasability of the film) can reduce the surface haze of a crystallized polymer film, and have completed the invention based on such fact.

Specific measures of solving the problem are as follows:

<1> A crystallized polymer film including a polymer (A) that has a weight-average molecular weight of from 50,000 to 1,000,000 and a crystallization half time at the temperature at which the polymer crystallizes fastest in a range of from 180 seconds to 900 seconds,
having a crystallinity of from 20% to 80% as obtained by a DSC method, and
having a difference between a total haze and an internal haze of 0.8% or less in a case in which the total haze and the internal haze are measured at 25°C in accordance with JIS-K7105.
<2> The crystallized polymer film according to <1>, the film having a total haze of 40% or less.
<3> The crystallized polymer film according to <1> or <2>, the film having a ratio of the maximum tensile elastic modulus Emax of an tensile elastic modulus (TD) in the TD direction and an tensile elastic modulus (MD) in the MD direction to the minimum tensile elastic modulus Emin of from 1.30 to 2.50,
in a case in which the tensile elastic modulus (TD) and the tensile elastic modulus (MD) are measured in accordance with JIS-K-7127.
<4> The crystallized polymer film according to any one of <1> to <3>, the film having an internal haze of 20% or less and a piezoelectric constant $d_{14}$ of 1 pC/N or more as measured at 25°C using a stress-charge method.
<5> The crystallized polymer film according to any one of <1> to <4>, the film having an internal haze of 1% or less.
<6> The crystallized polymer film according to any one of <1> to <5>, in which the polymer (A) is a polylactic acid-type polymer that has a main chain having a repeating unit represented by the following Formula (1):

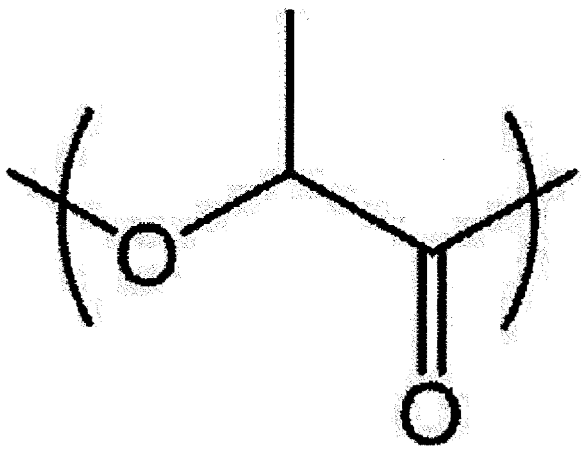

(1)

<7> The crystallized polymer film according to any one of <1> to <6>, in which the polymer (A) has an optical purity of 95.00% ee or more.
<8> The crystallized polymer film according to any one of <1> to <7>, the film including the polymer (A) in an amount of 80% by mass or more.
<9> The crystallized polymer film according to any one of <1> to <8>, the film being obtained by contacting a principal plane of a film that includes the polymer (A) with a surface of a heating member that permits releasability of the film to heat the film.
<10> A method for producing the crystallized polymer film according to any one of <1> to <9>, the method including a step of preparing a film that includes the polymer (A), and
a crystallization step of heating the film at a temperature T (°C) that satisfies the following Formula (a) by contacting a principal plane of the film with a surface of a heating member that permits releasability of the film to obtain the crystallized polymer film.

$$\text{Formula (a): } Tg + 30 < T < Tm - 20$$

[In Formula (a), Tg represents the glass transition temperature (°C) of the polymer (A) as measured by a DSC method, and Tm represents the melting point of the polymer (A).]
<11> The method for producing the crystallized polymer film according to <10>, in which the heating member has a surface layer that includes a fluororesin and that is in contact with the principal plane.

<12> The method for producing the crystallized polymer film according to <10> or <11>, in which the surface of the heating member has a maximum height Rz of 0.20 μm or more.

<13> The method for producing the crystallized polymer film according to any one of <10> to <12>, in which the surface of the heating member has an arithmetic mean roughness Ra of 0.05 μm or more.

<14> The method for producing the crystallized polymer film according to any one of <10> to <13>, in which the preparation step is to prepare a film that includes the polymer (A) and that is stretched mainly in a uniaxial direction.

<15> The method for producing the crystallized polymer film according to any one of <10> to <14>, in which the preparation step is to prepare a pre-crystallized film that includes the polymer (A).

<16> The method for producing the crystallized polymer film according to any one of <10> to <15>, in which the preparation step includes a step of obtaining a pre-crystallized film that includes the polymer (A) and a step of stretching the pre-crystallized film mainly in a uniaxial direction.

Effects of the Invention

The invention provides a crystallized polymer film having reduced surface haze and a method for producing the film.

DESCRIPTION OF EMBODIMENTS

«Crystallized Polymer Film»

The crystallized polymer film of the invention includes a polymer (A) having a weight-average molecular weight of from 50,000 to 1,000,000 and a crystallization half time at the temperature at which the polymer crystallizes fastest in a range of from 180 seconds to 900 seconds and has a crystallinity of from 20% to 80% as obtained by a DSC method and a difference between a total haze and an internal haze of 0.8% or less.

<Haze>

The crystallized polymer film of the invention has a difference between a total haze and an internal haze of 0.8% or less.

Thus, the crystallized polymer film of the invention is a film having reduced surface haze, the surface haze being difficult to uniformly control across a film surface.

According to the crystallized polymer film of the invention, a difference between the total haze and the internal haze of 0.8% or less is expected to lead to increased uniformity of the total haze across a surface of the film (hereinafter also referred to as "uniformity across a surface").

The crystallized polymer film more preferably has a difference between a total haze and an internal haze (i.e., surface haze) of 0.7% or less and particularly preferably 0.3% or less.

As used herein, the total haze represents the sum of the surface haze and the internal haze, as described above.

In the invention, the total haze and the internal haze are measured at 25°C for a crystallized polymer film having a thickness of 0.05 mm, in accordance with JIS-K7105.

In the invention, the internal haze (hereinafter also referred to as "internal haze H1") is measured in the following manner: First, the haze of a laminated body constituted by only silicone oil placed between two quartz glass plates (hereinafter also referred to as "haze H2") and the haze of a laminated body constituted by a crystallized polymer film that has a surface uniformly covered with silicone oil and that is sandwiched between two quartz glass plates (hereinafter also referred to as "haze H3") are measured at 25°C in accordance with JIS-K7105. Then, the internal haze H1 is determined with the following formula:

$$\text{Internal Haze (H1)} = \text{Haze (H3)} - \text{Haze (H2)}$$

In the invention, the surface haze is determined by subtracting the internal haze from the total haze.

In the invention, the total haze, the internal haze, and the surface haze are determined using visible light.

The crystallized polymer film of the invention preferably has a total haze of 40% or less in terms of transparency and great significance of reducing the surface haze. The crystallized polymer film more preferably has a total haze of 20% or less, still more preferably 15% or less, and particularly preferably 10% or less.

The crystallized polymer film having a lower total haze is better in terms of transparency. The lower limit of the total haze is not critical, and the total haze in the invention can be, for example, 0.1% or more, preferably 0.3% or more,

more preferably 0.5% or more, and still more preferably 0.8% or more.

The crystallized polymer film of the invention can be suitably used as, for example, a piezoelectric film. The film having a total haze of 0.1% or more can have a higher piezoelectric constant.

The crystallized polymer film of the invention preferably has an internal haze of 40% or less in terms of transparency.

The crystallized polymer film more preferably has an internal haze of 20% or less, still more preferably 15% or less, yet still more preferably 10% or less, still even more preferably 2.0% or less, and particularly preferably 0.8% or less.

The film having a lower internal haze is better in terms of transparency. The lower limit of the internal haze is not critical, and the internal haze in the invention can be, for example, 0.1% or more.

In a case in which the crystallized polymer film is used as, for example, a piezoelectric film, the film having an internal haze of 0.1% or more is suitable in terms of achieving a higher piezoelectric constant.

The crystallized polymer film of the invention preferably has a larger ratio of internal haze, which is relatively readily controlled uniformly across a film surface, to total haze, compared with the ratio of surface haze, which is difficult to control uniformly across a film surface, to total haze.

<Crystallization Half Time>

The polymer (A) in the invention has a weight-average molecular weight of from 50,000 to 1,000,000 and a crystallization half time at the temperature at which the polymer crystallizes fastest in a range of from 180 seconds to 900 seconds.

As used herein, the term "crystallization half time at the temperature at which the polymer crystallizes fastest" refers to a period of time required for an amorphous polymer to exhibit half the total exotherm in a case in which the polymer is heated and maintained at the temperature at which the polymer crystallizes fastest.

In the invention, the "temperature at which the polymer crystallizes fastest" and the "crystallization half time at the temperature at which the polymer crystallizes fastest" are determined by differential scanning calorimetry (DSC).

The "temperature at which the polymer crystallizes fastest" depends on the type of the polymer (A), and is preferably, for example, from 105°C to 135°C, more preferably from 110°C to 130°C, and still more preferably from 110°C to 125°C.

For example, polyethylene terephthalate (PET), which is a common polymer, has a "temperature at which the polymer crystallizes fastest" of 160°C and a "crystallization half time at the temperature at which the polymer crystallizes fastest" of from 40 seconds to 100 seconds.

Thus, the polymer (A) of the invention can be described as a polymer having a longer "crystallization half time at the temperature at which the polymer crystallizes fastest" (i.e., a slower crystallization rate) compared with PET.

The polymer (A) has a crystallization half time in a range of from 180 seconds to 900 seconds.

In the invention, one of the ways for achieving a difference between a total haze and an internal haze of 0.8% or less is to select a polymer (A) having a crystallization half time in the above range.

A polymer having a crystallization half time of less than 180 seconds would tend to provide a difference between a total haze and an internal haze of more than 0.8%.

A polymer having a crystallization half time of more than 900 seconds would also tend to provide a difference between a total haze and an internal haze of more than 0.8%. The polymer has a very slow crystallization rate, and thus decreases productivity of the crystallized polymer film.

The polymer (A) preferably has a crystallization half time of from 300 seconds to 700 seconds and more preferably from 400 seconds to 600 seconds.

More preferred ranges for the polymer (A) are described below.

Another preferred way for producing the crystallized polymer film having a difference between a total haze and an internal haze of 0.8% or less is to heat a film that includes the polymer (A) by contacting a principal plane of the film with a surface of a heating member that permits releasability of the film to obtain the crystallized polymer film. This way is described in detail below.

In the invention, the term "principal plane" of a film refers to a surface of the film, having the largest area.

For example, in a case in which a film has a 10 mm × 0.05 mm rectangular surface A, a 3 mm × 0.05 mm rectangular surface B, and two 10 mm × 3 mm rectangular surfaces C, the surfaces C are the principal planes of the film, and thus the film has two principal planes.

<Crystallinity>

The crystallized polymer film of the invention has a crystallinity of from 20% to 80% as obtained by a DSC(differential scanning calorimetry) method.

The film having a crystallinity of less than 20% would tend to have insufficient strength.

The film having a crystallinity of more than 80% would tend to have an insufficient transparency (i.e., a high internal haze).

The film having a crystallinity of from 20% to 80% is also advantageous in increasing the uniformity of the internal haze across a surface.

The film preferably has a crystallinity of from 30% to 70%.

The crystallized polymer film having a crystallinity of 20% or more is also advantageous in increasing the piezoelectricity (piezoelectric constant) in a case in which the crystallized polymer film is used as a piezoelectric film.

<Tensile elastic modulus>

(Measurement of Elastic Moduli (TD and MD) of Crystallized Polymer Film)

The tensile elastic modulus (TD) in the TD direction and the tensile elastic modulus (MD) in the MD direction of the crystallized polymer film may be measured in accordance with JIS-K-7127.

(Calculation of Emax/Emin)

The ratio of the maximum tensile elastic modulus Emax to the minimum tensile elastic modulus Emin (Emax/Emin) is calculated based on the elastic moduli (TD and MD) measured as described above. The minimum tensile elastic modulus of the elastic moduli (TD and MD) is considered as Emin, and the maximum tensile elastic modulus of the elastic moduli (TD and MD) is considered as Emax.

The crystallized polymer film of the invention preferably has a ratio of the maximum tensile elastic modulus Emax to the minimum tensile elastic modulus Emin (Emax/Emin) of from 1.30 to 2.50.

The crystallized polymer film having such properties can be produced by, for example, subjecting the film to stretching treatment.

As used herein, the Emin is the minimum value of the elastic moduli in the direction parallel to a principal plane of the crystallized polymer film, while the Emax is the maximum value of the elastic moduli in the direction parallel to a principal plane of the crystallized polymer film.

The crystallized polymer film having a ratio (Emax/Emin) of 1.30 or more have an increased strength.

The crystallized polymer film having a ratio (Emax/Emin) of 2.50 or less suppresses the reduction in strength in the direction in which the Emin is exhibited (for example, the direction perpendicular to a main stretching direction in a plane of the film).

The crystallized polymer film preferably has a ratio (Emax/Emin) of from 1.50 to 2.30 and more preferably from 1.70 to 2.10.

<Standardized Molecular Orientation Ratio MORc>

The crystallized polymer film of the invention preferably has a standardized molecular orientation ratio MORc of from 3.5 to 15.0.

The polymer film having a standardized molecular orientation ratio MORc in a range of from 3.5 to 15.0 has a high strength and suppresses the reduction in strength in a certain direction (for example, the direction perpendicular to a main stretching direction in a plane of the film).

The polymer film having an MORc in the above range allows many chains of the polymer (A) to be aligned with the stretching direction and thus increases the rate of production of oriented crystals, which can result in high piezoelectricity.

Before describing the standardized molecular orientation ratio MORc, molecular orientation ratio MOR will be described first.

The molecular orientation ratio MOR indicates the degree of molecular orientation and is measured by a microwave measurement method as described below.

More specifically, a sample (film) is placed in a microwave resonant waveguide of a well-known microwave molecular orientation ratio measuring apparatus (also referred to as "microwave transmission-type molecular orientation meter") with a surface of the sample (a surface of the film) oriented perpendicular to the direction of travel of the microwave. Then, while the sample is continuously irradiated with the microwave oscillating unevenly in one direction, the sample is rotated from 0 to 360° in the plane perpendicular to the direction of travel of the microwave, and the intensity of the microwave passing through the sample is measured to determine the molecular orientation ratio MOR.

The standardized molecular orientation ratio MORc refers to MOR based on a reference thickness tc of 50 μm and can be determined with the following formula:

$$MORc = (tc/t) \times (MOR - 1) + 1$$

(tc: reference thickness for correction, t: sample thickness)

The standardized molecular orientation ratio MORc can be measured at a resonance frequency of about 4 GHz or about 12 GHz using a known molecular orientation meter such as MOA-2012A or MOA-6000 microwave transmission-type molecular orientation meter from Oji Scientific Instruments Co., Ltd.

The standardized molecular orientation ratio MORc can be controlled by crystallization conditions (for example, heating temperature and heating period) and stretching conditions (for example, stretching temperature and stretching rate) for producing the crystallized polymer film.

The standardized molecular orientation ratio MORc can be converted to birefringence $\Delta n$, which is phase difference (retardation) divided by the thickness of a film.

Specifically, the retardation can be measured using RETS 100 from Otsuka Electronics Co., Ltd. The MORc is generally linearly proportional to the $\Delta n$, and in a case in which the $\Delta n$ is 0, the MORc is 1.

For example, in a case in which the polymer (A) is a polylactic acid-type polymer, and the birefringence $\Delta n$ is measured at a wavelength of 550 nm, the preferred lower limit of the standardized molecular orientation ratio MORc of 2.0 can be converted to the birefringence $\Delta n$ of 0.005. The preferred lower limit of the product of the standardized molecular orientation ratio MORc and the crystallinity of the crystallized polymer film of 40 can be converted to the product of the birefringence $\Delta n$ and the crystallinity of the crystallized polymer film of 0.1.

<Product of Standardized Molecular Orientation Ratio MORc and Crystallinity>

The crystallized polymer film preferably has a product of a standardized molecular orientation ratio MORc and a crystallinity of from 40 to 700, more preferably from 75 to 680, still more preferably from 90 to 660, yet still more preferably from 125 to 650, and still even more preferably from preferably 180 to 350.

The film having the product in a range of from 40 to 700 maintains suitable transparency and dimensional stability.

The crystallized polymer film also maintains suitable piezoelectricity in a case in which the film is used as a piezoelectric film.

<Piezoelectric Constant $d_{14}$ (Stress-Charge Method)>

The crystallized polymer film of the invention is suitably used as, for example, a piezoelectric film.

In view of the suitable use as a piezoelectric film, the crystallized polymer film preferably has a piezoelectric constant $d_{14}$ of 1 pC/N or more as measured at 25°C using a stress-charge method.

The "piezoelectric constant $d_{14}$ as measured at 25°C using a stress-charge method" is hereinafter also simply referred to as "piezoelectric constant $d_{14}$" or "piezoelectric constant".

Now, an example of a method for measuring the piezoelectric constant $d_{14}$ using a stress-charge method will be described.

First, the crystallized polymer film is cut into a rectangular specimen having a length of 150 mm in the direction of 45° with respect to the stretching direction (the MD direction) of the crystallized polymer film and a width of 50 mm in the direction perpendicular to the above 45° direction. Then, the specimen is placed on the test platform of SIP-600 from Showa Shinku Co., Ltd., and A1 is deposited on one surface of the specimen at an A1 deposition thickness of about 50 nm. Then, A1 is deposited on the other surface the specimen in the same manner to provide the specimen having an A1 conductive layer on the both surfaces.

The 150 mm x 50 mm specimen (crystalline polymer piezoelectric material) having an A1 conductive layer on the both surfaces is cut into a rectangular film having a length of 120 mm in the direction of 45° with respect to the stretching direction (the MD direction) of the crystallized polymer film and a width of 10 mm in the direction perpendicular to the above 45° direction. The film is used as a sample for measurement of the piezoelectric constant.

The resultant sample is tightly clamped into a tensile tester (TENSILON RTG-1250 from AND Co., Ltd) with a distance between chucks of 70 mm. Then, a force varying in the range of from 4N to 9N is periodically applied at a crosshead speed of 5 mm/min. To measure the amount of charge generated in the sample in response to the applied force, a capacitor having a capacitance of Qm (F) is connected in parallel with the sample, and the voltage V between the terminals of the capacitor Cm (95 nF) is measured via a buffer amplifier. The measurement is performed at a temperature of 25°C. The amount of charge stored on each plate Q (C) is calculated as the product of the capacitance Cm of the capacitor and the voltage between the terminals Vm. The piezoelectric constant $d_{14}$ is calculated with the following formula:

$$d_{14} = (2 \times t)/L \times Cm \cdot \Delta Vm/\Delta F$$

t: sample thickness (m)
L: distance between chucks (m)
Cm: capacitance of capacitor connected in parallel (F)
$\Delta$Vm/AF: ratio of change in voltage between the terminals of capacitor to change in force

A higher piezoelectric constant $d_{14}$ leads to a larger displacement of the crystallized polymer film in response to voltage applied to the crystallized polymer film and to a higher voltage generated in response to force applied to the crystallized polymer film, which is beneficial to the piezoelectric film.

Particularly, the crystallized polymer film preferably has a piezoelectric constant $d_{14}$ of 1 pC/N or more, more preferably 3 pC/N or more, and still more preferably 4 pC/N or more as measured at 25°C using the stress-charge method. The upper limit of the piezoelectric constant $d_{14}$ is not critical, and the crystallized polymer film that uses a helical chiral polymer preferably has a piezoelectric constant $d_{14}$ of 50 pC/N or less and more preferably 30 pC/N or less in view of the balance with transparency as described below.

In view of the balance with transparency, the crystallized polymer film preferably has a piezoelectric constant $d_{14}$ of 15 pC/N or less as measured by a resonance method.

As used herein, the term "MD direction" refers to the direction in which the film travels (machine direction), while the term "TD direction" refers to the direction perpendicular to the MD direction and parallel to a principal plane of the film (transverse direction).

<Thickness>

The thickness of the crystallized polymer film of the invention is not particularly limited, and for example, the crystallized polymer film can have a thickness of from 10 μm to 1000 μm, preferably from 10 μm to 400 μm, more preferably from 20 μm to 200 μm, still more preferably from 20 μm to 100 μm, and particularly preferably from 30 μm to 80 μm.

The crystallized polymer film of the invention may be a single-layered or multi-layered film.

In the case of a multi-layered film, it is only necessary that at least one of the layers is the crystallized polymer film of the invention.

In the case of a multi-layered film (for example, a multi-layered film obtained by multi-layering and molding), the crystallized polymer film of the invention (single-layered film) is extracted and measured for the total haze and the internal haze.

Next, individual components of the crystallized polymer film will be described.

<Polymer (A)>

The crystallized polymer film of the invention includes at least one polymer (A) having a weight-average molecular weight of from 50,000 to 1,000,000 and a crystallization half time at the temperature at which the polymer crystallizes fastest in a range of from 180 seconds to 900 seconds.

The "crystallization half time of the polymer (A) at the temperature at which the polymer crystallizes fastest" is as described above.

The polymer (A) has a weight-average molecular weight of from 50,000 to 1,000,000.

The polymer (A) having a weight-average molecular weight of less than 50,000 would provide a crystallized polymer film having an insufficient mechanical strength. The polymer (A) preferably has a weight-average molecular weight of 100,000 or more and more preferably 150,000 or more.

Meanwhile, the polymer (A) having a weight-average molecular weight of more than 1,000,000 would be difficult to mold (for example, extrusion-mold into, for example, a film shape). The polymer (A) preferably has a weight-average molecular weight of 800,000 or less and more preferably 300,000 or less.

In terms of strength of the film, the polymer (A) preferably has a molecular weight distribution (Mw/Mn) of from 1.1 to 5, more preferably from 1.2 to 4, and still more preferably from 1.4 to 3.

The weight-average molecular weight Mw and the molecular weight distribution (Mw/Mn) of the polymer (A) are measured using the following gel permeation chromatography (GPC) method and equipment.

- GPC System -

GPC-100 from Waters Corp.

- Column -

SHODEX LF-804 from Showa Denko K.K.

- Preparation of Sample -

The optically active polymer (A) is dissolved in a solvent (for example, chloroform) at a concentration of 1 mg/ml at 40°C to prepare a sample solution.

- Measurement Conditions -

0.1 ml of the sample solution is injected into the column with a solvent (chloroform) at a temperature of 40°C and a flow rate of 1 ml/min.

The concentration of the sample in the sample solution separated in the column is measured using a differential refractometer. The universal calibration curve is created using polystyrene standards, and the weight-average molecular weight (Mw) and the molecular weight distribution (Mw/Mn) of the optically active polymer (A) are calculated.

The polymer (A) is preferably a helical chiral polymer having optical activity (hereinafter also referred to as "optically active polymer").

The term helical chiral polymer having optical activity (optically active polymer) refers to a polymer having molecular optical activity and a helical molecular structure.

Examples of the optically active polymer can include polypeptides, cellulose derivatives, polylactic acid-type resins, polypropylene oxides, and poly((β-hydroxybutyrate).

Examples of the polypeptides include poly(γ-benzyl glutamate) and poly(γ-methyl glutamate).

Examples of the cellulose derivatives include cellulose acetate and cyanoethyl cellulose.

In the invention, the polymer (A) preferably has an optical purity of 95.00% ee or more, more preferably 96.00% ee or more, still more preferably 99.00% ee or more, yet still more preferably 99.99% ee or more, and desirably 100.00% ee.

By using the polymer (A) having an optical purity in the above range, crystals of the polymer in the crystallized polymer film are more densely packed. This can result in further increased piezoelectricity (piezoelectric constant), for example in a case in which the crystallized polymer film is used as a piezoelectric film.

The optical purity of the polymer (A) is calculated with the following formula:

$$\text{Optical Purity (\% ee)} = 100 \times |\text{Amount of L-form} - \text{Amount of D-form}| / (\text{Amount of L-form} + \text{Amount of D-form})$$

Thus, the optical purity is defined as "the difference (absolute value) between the amount (% by mass) of the L-form and the amount (% by mass) of the D-form in the polymer (A)" divided by "the total of the amount (% by mass) of the L-form and the amount (% by mass) of the D-form in the polymer (A)" multiplied by "100".

As used herein, the amount (% by mass) of the L-form and the amount (% by mass) of the D-form in the polymer (A) are obtained using high performance liquid chromatography (HPLC).

In view of increasing the optical purity (and of increasing the piezoelectricity in a case in which the crystallized polymer film is used as a piezoelectric film), the polymer (A) preferably has a main chain having a repeating unit represented by the following Formula (1):

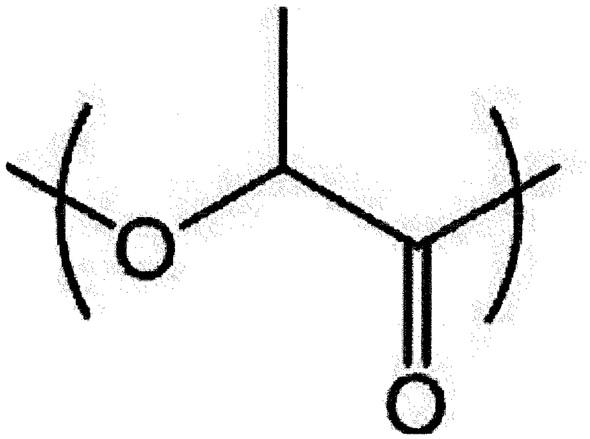

(1)

Examples of the polymer that has a main chain having a repeating unit represented by Formula (1) include polylactic acid-type polymers. Among them, polylactic acids are preferred, and homopolymers of L-lactic acid (PLLA) or homopolymers of D-lactic acid (PDLA) are most preferred. The polylactic acid-type polymers in the embodiment refer to "polylactic acids (polymer compounds consisting of only repeating units derived from monomers selected from L-lactic acid or D-lactic acid)", "copolymers of L-lactic acid or D-lactic acid and a compound copolymerizable with the L-lactic acid or D-lactic acid", or mixtures thereof.

The "polylactic acids" are a long polymer formed by polymerization of lactic acid via ester bonds and is known to be able to be produced, for example, from lactide (a lactide method) or by heating lactic acid in a solvent under reduced pressure and polymerizing the lactic acid while removing water (a direct polymerization method). Examples of the "polylactic acids" include homopolymers of L-lactic acid, homopolymers of D-lactic acid, block copolymers that includes at least one of polymerized L-lactic acids or polymerized D-lactic acids, and graft copolymers that includes at least one of polymerized L-lactic acids or polymerized D-lactic acids.

Examples of the "compound copolymerizable with L-lactic acid or D-lactic acid" can include hydroxycarboxylic acids such as glycolic acid, dimethyl glycolic acid, 3-hydroxybutyric acid, 4-hydroxybutyric acid, 2-hydroxypropanoic acid, 3-hydroxypropanoic acid, 2-hydroxyvaleric acid, 3-hydroxyvaleric acid, 4-hydroxyvaleric acid, 5-hydroxyvaleric acid, 2-hydroxycaproic acid, 3-hydroxycaproic acid, 4-hydroxycaproic acid, 5-hydroxycaproic acid, 6-hydroxycaproic acid, 6-hydroxymethylcaproic acid, and mandelic acid; cyclic esters such as glycolide, $\beta$-methyl-$\delta$-valerolactone, $\gamma$-valerolactone, and $\varepsilon$-caprolactone; polycarboxylic acids such as oxalic acid, malonic acid, succinic acid, glutaric acid, adipic acid, pimelic acid, azelaic acid, sebacic acid, undecanedioic acid, dodecanedioic acid, and terephthalic acid and anhydrides thereof; polyhydric alcohols such as ethylene glycol, diethylene glycol, triethylene glycol, 1,2-propanediol, 1,3-propanediol, 1,3-butanediol, 1,4-butanediol, 2,3-butanediol, 1,5-pentanediol, 1,6-hexanediol, 1,9-nonanediol, 3-methyl-1,5-pentanediol, neopentyl glycol, tetramethylene glycol, and 1,4-hexanedimethanol; polysaccharides such as cellulose; and aminocarboxylic acids such as $\alpha$-amino acid.

Examples of the "copolymer of L-lactic acid or D-lactic acid and a compound copolymerizable with the L-lactic acid or D-lactic acid" include block copolymers and graft copolymers having a polylactic acid sequence that can form helical crystals.

The polymer (A) preferably has a concentration of a structure derived from the copolymerizable component of 20 mol% or less. For example, in a case in which the polymer (A) is a polylactic acid-type polymer, the polymer (A) preferably has a concentration of a structure derived from the compound copolymerizable with the lactic acid (copolymerizable component) of 20 mol% or less with respect to the total number of moles of a structure derived from lactic acid and the structure derived from the copolymerizable component.

The polylactic acid-type polymer can be produced by, for example, direct dehydration-condensation of lactic acid as described in JP-A No. S59-096123 and JP-A No. H07-033861 or ring-opening polymerization of lactide, which is the cyclic dimer of lactic acid, as described in, for example, US Patent No. 2,668,182 and US Patent No. 4,057,357.

To obtain the polymer having an optical purity of 95.00% ee or more by any of the methods as described above, for example, it is preferred to polymerize lactide having an increased optical purity of 95.00% ee or more due to crystallization, in a case in which the polylactic acid is produced by the lactide method.

The polylactic acid-type polymer may be a commercially available polylactic acid. Examples of the commercially available polylactic acid include PURASORB (PD and PL) from Purac Biomaterials, LACEA (H-100 and H-400) from Mitsui Chemicals, Inc., and Ingeo™biopolymers from NatureWorks LLC.

In a case in which the polylactic acid-type polymer is used as the polymer (A), it is preferred to produce the polylactic acid-type polymer by the lactide method or the direct polymerization method in order to obtain the polylactic acid-type polymer having a weight-average molecular weight (Mw) of 50,000 or more.

The crystallized polymer film of the invention preferably includes the polymer (A) in an amount of 80% by mass or more.

<Stabilizer (B)>

The crystallized polymer film of the invention preferably includes, as a stabilizer, a compound having one or more functional groups selected from the group consisting of a carbodiimide group, an epoxy group, and an isocyanate group and having a weight-average molecular weight of from 200 to 60,000.
This stabilizer (B) is used in order to suppress hydrolysis of the polymer (A) (the hydrolysis is expected to proceed, for example, according to the reaction scheme described below) and improve wet heat resistance of the resultant film.
For the stabilizer, you can see the paragraphs 0039-0055 of WO2013/054918, if necessary.

<Other Components>

The crystallized polymer film of the invention may include other components including known resins such as polyvinylidene fluoride, polyethylene resin, and polystyrene resin, inorganic fillers such as silica, hydroxyapatite, and montmorillonite, and known crystal nucleating agents such as phthalocyanine, to the extent that the components do not reduce the benefits of the invention.
In a case in which the crystallized polymer film of the invention includes a component other than the polymer (A), the film preferably includes the component other than the polymer (A) in an amount of 20% by mass or less and more preferably 10% by mass or less with respect to the total mass of the crystallized polymer film.

- Inorganic Filler -

For example, to obtain the crystallized polymer film as a transparent film having reduced voids such as bubbles, an inorganic filler such as hydroxyapatite may be nano-dispersed in the crystallized polymer film. It is to be noted that to nano-disperse the inorganic filler, a large amount of energy is needed to de-agglomerate the agglomerates and that in a case in which the filler cannot be nano-dispersed, the film may have reduced transparency. In a case in which the crystallized polymer film of the invention includes an inorganic filler, the crystallized polymer film preferably includes the inorganic filler in an amount of less than 1% by mass with respect to the total mass of the crystallized polymer film.

- Crystallization Accelerator (Crystal Nucleating Agents)-

Any crystallization accelerator may be used as long as the accelerator has the effect of promoting crystallization, and the crystallization accelerator is desirably selected from the substances having a crystal structure with interplanar spacing similar to the spacing in the crystal lattice of the polymer (A). A substance with more similar interplanar spacing has a greater effect as the nucleating agent.
For example, in a case in which the polymer (A) is a polylactic acid-type polymer, examples of the crystallization accelerator include organic materials such as zinc phenylsulfonate, melamine polyphosphate, melamine cyanurate, zinc phenylphosphonate, calcium phenylphosphonate, and magnesium phenylphosphonate, and inorganic materials such as talc and clay. Among them, zinc phenylphosphonate is preferred, as it has an interplanar spacing most similar to the interplanar spacing in polylactic acid and is highly effective in accelerating crystallization. The crystallization accelerator may be a commercially available product. More particularly, examples of the commercially available product include ECOPROMOTE zinc phenylphosphonate (from Nissan Chemical Industries, Ltd.).
The film includes a crystal nucleating agent typically in an amount of from 0.01 parts by weight to 1.0 parts by weight, preferably from 0.01 parts by weight to 0.5 parts by weight, and, in view of better accelerating crystallization and maintaining biomass ratio, particularly preferably from 0.02 parts by weight to 0.2 parts by weight based on 100 parts by weight of the polymer (A). Inclusion of a crystal nucleating agent in an amount of less than 0.01 parts by weight would not be sufficiently effective in accelerating crystallization, while inclusion of a crystal nucleating agent in an amount of more than 1.0 part by weight would make it difficult to control the rate of crystallization, and thus the resultant film would tend to have reduced transparency.

<Applications of Film>

The crystallized polymer film of the invention can be suitably used as, for example, a piezoelectric film.
In addition to a piezoelectric film, the crystallized polymer film of the invention can be used as, for example, optical films for, for example, display devices.

The crystallized polymer film of the invention can be used as a piezoelectric film having a high piezoelectric constant $d_{14}$, high transparency, and a high dimensional stability, and thus can be used for various articles such as speaker systems, headphones, touch panels, remote controllers, microphones, underwater microphones, ultrasonic transducers, ultrasonic meters, piezoelectric vibrators, mechanical filters, piezoelectric transformers, delay devices, sensors, acceleration sensors, impact sensors, vibration sensors, pressure-sensitive sensors, tactile sensors, electric field sensors, sound pressure sensors, displays, fans, pumps, variable-focus mirrors, sound insulation materials, sound proof materials, keyboards, acoustic equipment, information processing equipment, measurement equipment, and medical equipment.

In a case in which the crystallized polymer film of the invention functions as a piezoelectric film, the polymer film is preferably used as a piezoelectric element having at least two surfaces provided with electrodes.

It is only necessary that electrodes are provided on at least two of the surfaces of the crystallized polymer film. Examples of the electrodes include, but not limited to, ITO, ZnO, IZO®, and conductive polymers.

The crystallized polymer film of the invention and electrodes may also be disposed on top of one another to form a laminated piezoelectric element.

Examples of the laminated piezoelectric element include elements formed by disposing units of an electrode and a piezoelectric film on top of one another and covering, with an electrode, a principal plane of the piezoelectric film, not covered with an electrode. More particularly, in a case in which two of the units are disposed on top of one another, the laminated piezoelectric element is formed of an electrode, a crystallized polymer film, an electrode, a crystallized polymer film, and an electrode that are disposed on top of one another in this order. It is only necessary that crystallized polymer films used for the laminated piezoelectric element include at least one of the crystallized polymer films of the invention, and the other films need not be the crystallized polymer film of the invention.

In a case in which a laminated piezoelectric element includes a plural number of the crystallized polymer films of the invention, one of the crystallized polymer films of the invention needs to include the polymer (A) in the L optical configuration, and the others of the crystallized polymer films of the invention may include the polymer (A) in the L or D optical configuration. The arrangement of the crystallized polymer films may be adjusted as appropriate for each application of the piezoelectric element.

In a case in which a first crystallized polymer film including the polymer (A) in the L optical configuration as a major component is disposed on a second crystallized polymer film including the polymer (A) in the L optical configuration as a major component via an electrode, the displacement directions of the first crystallized polymer film and the second crystallized polymer film can be aligned by allowing the direction in which the first crystallized polymer film is uniaxially stretched (main stretching-direction) to cross, preferably perpendicularly, the direction in which the second crystallized polymer film is uniaxially stretched (main stretching-direction). Such arrangement is preferred because the laminated piezoelectric element can have increased piezoelectricity as a whole.

For example, in a case in which a first crystallized polymer film including the polymer (A) in the L optical configuration as a major component is disposed on a second crystallized polymer film including the polymer (A) in the D optical configuration as a major component via an electrode, the displacement directions of the first crystallized polymer film and the second crystallized polymer film can be aligned by allowing the direction in which the first crystallized polymer film is uniaxially stretched (main stretching-direction) to be oriented approximately parallel to the direction in which the second crystallized polymer film is uniaxially stretched (main stretching-direction). Such arrangement is preferred because the laminated piezoelectric element can have increased piezoelectricity as a whole.

Especially in a case in which a principal plane of the crystallized polymer film is provided with an electrode, the electrode preferably has a transparency. When we refer that the electrode has a transparency, we particularly mean that the electrode has an internal haze of 20% or less (a total light transmittance of 80% or more).

The piezoelectric elements using the crystallized polymer film of the invention can be used in various piezoelectric devices as described above, such as speaker systems and touch panels. Especially, the piezoelectric elements provided with an electrode having a transparency is suitably used in, for example, a speaker system, a touch panel, and an actuator.

«Method for Producing Crystallized Polymer Film»

A method for producing the crystallized polymer film of the invention is not particularly limited, and the following production method is preferred in that the method readily allows for the production of the crystallized polymer film having a difference between a total haze and an internal haze of 0.8% or less.

The preferred method for producing the crystallized polymer film of the invention includes a step of preparing a film that includes the polymer (A), and a crystallization step of heating (hereinafter also referred to as "annealing") the film by contacting a principal plane of the film with a surface of a heating member that permits releasability of the film to obtain the crystallized polymer film.

The production method may include other steps, if necessary.

The production method readily allows for the adjustment of the difference between the total haze and the internal haze (i.e., the surface haze) of the crystallized polymer film to 0.8% or less.

Although the reason is not fully understood, possible reasons include the following:

In the crystallization step, heating of the film that includes the polymer (A) by the contact process induces the crystallization of the polymer (A) and thus leads to the crystallized polymer film.

As the surface of the heating member permits releasability of the film, the polymer (A) is believed to be crystallized with low adhesion of the principal plane of the film to the surface (that permits releasability of the film) of the heating member in the crystallization step. In addition, the polymer (A) is relatively slowly crystallized (compared with, for example, PET), as described above.

For the two reasons, irregularities in the surface of the heating member are less likely to be transferred to the surface of the film after the crystallization (crystallized polymer film). This may lead to a crystallized polymer film with reduced irregularities in the surface (i.e., reduced surface haze).

In other words, in a case in which a polymer having a higher crystallization rate (such as PET) and a heating member that does not permit releasability of a film, the polymer is rapidly crystallized with high adhesion of a surface of the film to a surface of the heating member. Thus, irregularities in the surface of the heating member are more likely to be transferred to the surface of the film after the crystallization. This may more likely lead to a film with increased irregularities in the surface (i.e., increased surface haze).

When we refer that a surface of the heating member "permits releasability", we mean that in a case in which the surface is heated to 130°C, a 24 mm × 50 mm adhesive tape (CT24 from Nichiban Co., Ltd.) is applied to the surface, and then the adhesive tape is pulled vertically upward to release the tape from the surface, the released adhesive tape has a percent dimensional change (represented by the following formula) in the pulling direction of 50% or less.

Dimensional Change (%) in Pulling Direction of Adhesive Tape = ((Dimension in Pulling Direction of Released Adhesive Tape - Dimension in Pulling Direction of Original Adhesive Tape)/Dimension in Pulling Direction of Original Adhesive Tape) × 100

Any heating member may be used as long as the member can crystallize the polymer in the film by heating the film by contacting a surface of the heating member with a principal plane of the film. Examples of the member include roll members (also referred to as heated rolls).

The roll members may include a single roll or a pinch roll (a pair of rolls).

In terms of enhancing the ability for the surface to permit releasability of a film, the heating member preferably has a surface layer that includes a fluororesin and that is in contact with a principal plane of the film.

Examples of the fluororesin include polytetrafluoroethylenes (PTFE), tetrafluoroethylene-perfluoroalkyl vinyl ether copolymers (PFA), tetrafluoroethylene-hexafluoropropylene copolymers (FEP), tetrafluoroethylene-hexafluoropropylene-perfluoroalkyl vinyl ether copolymers (EPA), tetrafluoroethylene-ethylene copolymers (ETFE), polychlorotrifluoroethylene (PCTFE), polyvinylidene fluorides (PVDF), tetrafluoroethylene-propylene copolymers (TFE/P), and tetrafluoroethylene-hexafluoropropylene-vinylidene fluoride copolymers (THV).

Among them, polytetrafluoroethylenes (PTFE) are particularly preferred.

The surface layer preferably includes the fluororesin in an amount of 50% by mass or more, more preferably 60% by mass or more, and particularly preferably 80% by mass or more.

It is not necessarily preferred that the heating member has a smooth surface in contact with the film that includes the polymer (A). Rather, it is preferred that the surface has some degree of irregularities (roughness).

The reason may be that in a case in which the surface of the heating member has some degree of irregularities, the film is less likely to adhere to recessed parts of the irregularities (for example, the film is not contacted with the recessed parts of the irregularities and is only contacted with projected parts) during the crystallization, and thus the irregularities in the surface of the heating member are less likely to be transferred to the surface of the crystallized polymer film.

Particularly, the surface of the heating member in contact with the film that includes the polymer (A) has a maximum height Rz of 0.20 μm or more, more preferably 0.50 μm or more, and particularly preferably 0.80 μm or more.

The upper limit of the maximum height Rz is not critical, and the maximum height Rz is more preferably 2.00 μm or less, more preferably 1.50 μm or less, and particularly preferably 1.30 μm or less, in terms of heating efficiency.

The surface preferably has an arithmetic mean roughness Ra of 0.05 μm or more and more preferably 0.10 μm or more.

The upper limit of the arithmetic mean roughness Ra is not critical, and the arithmetic mean roughness Ra is preferably 0.50 μm or less, more preferably 0.30 μm or less, and particularly preferably 0.25 μm or less, in terms of heating efficiency.

As used herein, the maximum height Rz and the arithmetic mean roughness Ra are in accordance with JIS B 0601 (2001).

Now, the individual steps of the production method will be described.

<Preparation Step>

The preparation step is to prepare a film that includes the polymer (A).
The film that includes the polymer (A) may be an amorphous film or a film that is partially previously crystallized (hereinafter also referred to as "pre-crystallized") prior to the crystallization step (the film is hereinafter also referred to as "pre-crystallized film").
The film that includes the polymer (A) may be a stretched film.
The film that includes the polymer (A) is particularly preferably a film obtained by stretching the pre-crystallized film.
The amorphous film can be obtained by, for example, heating a material that includes the polymer (A) to a temperature at or above the melting point Tm of the polymer (A) and then rapidly cooling the material.
The material that includes the polymer (A) may be a single polymer (A), a mixture of two or more polymers (A), or a mixture of at least one polymer (A) and at least one other component (for example, at least one stabilizer (B)).
The mixtures are preferably obtained by melt-kneading.
Examples of the mixtures obtained by melt-kneading include a mixture obtained by melt-kneading the polymer (A) (and optionally, other components) at a mixer speed of from 30 rpm to 70 rpm and a temperature from 180°C to 250°C for a period of 5 minutes to 20 minutes using a melt-kneading machine (LABO PLASTOMILL from Toyo Seiki Seisaku-sho, Ltd.).

(Pre-Crystallization)

The preparation step preferably includes a step of obtaining a pre-crystallized film that includes the polymer (A) in terms of readily obtaining a crystallized polymer film having a crystallinity of from 20% to 80% in the crystallization step described below.
The pre-crystallized film that includes the polymer (A) can be obtained by, for example, heating a material that includes the polymer (A) to a temperature higher than the glass transition temperature of the polymer (A), extrusion-molding the material into a film, and rapidly cooling the extruded film (to, for example, a heating temperature T2 as described below) at, for example, a caster.
The pre-crystallized film can also be obtained by heating an amorphous film that includes the polymer (A) to crystallize the film.
In a case in which the film is stretched prior to the crystallization step described below, 1) the pre-crystallized film may be placed on a stretching device and then be stretched (off-line processing), or 2) the amorphous film may be placed on a stretching device and then be heated to obtain a pre-crystallized film, and the resultant pre-crystallized film may be stretched on the stretching device (in-line processing).
The heating temperature T2 for the pre-crystallization is not particularly limited, and the heating temperature preferably satisfies a relationship with the glass transition temperature Tg of the polymer (A) as represented by the following formula, in terms of, for example, increasing transparency. It is also preferred to set the heating temperature so that the crystallinity is from 3% to 70% (more preferably from 10% to 60% and particularly preferably from 15% to 50%).

$$Tg - 40°C \leq T2 \leq Tg + 40°C$$

(Tg represents the glass transition temperature of the polymer (A).)
The pre-crystallized film preferably has a crystallinity of from 3% to 70%, more preferably from 10% to 60%, and particularly preferably from 15% to 50%.
It is preferred to heat the film for the pre-crystallization so that the resultant pre-crystallized film has a crystallinity in this range.
The crystallinity of the pre-crystallized film may be measured in the same manner as for the crystallinity of the final crystallized polymer film.
The heating period for the pre-crystallization may be adjusted as appropriate depending on the heating temperature, the thickness of the film, the molecular weight of the polymer (A), and the type and the amount of an additive. The heating period is typically from 5 seconds to 60 minutes and preferably from 1 minute to 30 minutes in terms of stability of the production conditions.
For example, in a case in which a pre-crystallized film that includes a polylactic acid-type polymer as the polymer (A) is obtained, the starting film is preferably heated for the pre-crystallization at a temperature of from 20°C to 170°C

for a period of from 5 seconds to 60 minutes (preferably from a minute to 30 minutes).

The thickness of the pre-crystallized film depends on, for example, the ratio of stretch in a case in which the film is optionally subsequently stretched, and the thickness is preferably from 50 μm to 1000 μm and more preferably from 200 μm to 800 μm.

(Stretching)

The preparation step preferably includes a step of stretching the film that includes the polymer (A) (preferably mainly in a uniaxial direction).

This can increase the strength of the resultant crystallized polymer film. This can also increase the area of a principal plane of the resultant crystallized polymer film (to, for example, 5 $mm^2$ or more and preferably 10 $mm^2$ or more).

Generally, irregularities in the surface of the heating member for the crystallization are often be transferred during crystallization (annealing) of the stretched film, which results in reduced surface haze, as described above. Thus, inclusion of the stretching step in the preparation step enhances the effect of reducing surface haze in the invention (the effect due to the crystallization half time of the polymer (A) and the effect due to the heating member having a surface that permits releasability of the film).

The stretching method is not particularly limited, and various stretching methods such as uniaxial stretching, biaxial stretching, and solid phase stretching can be used.

Stretching of the film mainly in a uniaxial direction stretch allows for orientation in one direction and high-density alignment of molecular chains of the polymer (A) (for example, a polylactic acid-type polymer). This results in higher piezoelectricity.

In a case in which the film is stretched only by tensile force as in uniaxial stretching or biaxial stretching, the film is preferably stretched at a temperature (stretching temperature) in a range of from about 10°C higher to about 20°C higher than the glass transition temperature of the polymer (A).

The ratio of stretch (stretching ratio) is preferably from 3 to 30 and more preferably from 3 to 15.

In a case in which the pre-crystallized film as the film includes the polymer (A) is stretched in the stretching step, the film may be pre-heated immediately before stretching, for ease of stretching.

Generally, the purpose of the pre-heating is to soften the film before stretching, for ease of stretching, and thus the film before stretching is typically pre-heated under the conditions that do not cause the film to be crystallized and hardened. However, in the invention, the film may be pre-crystallized before stretching, and thus the pre-heating may be performed in the pre-crystallization step.

More particularly, the pre-heating can be performed in the pre-crystallization step by heating the film at a temperature higher than a typical pre-heating temperature or for a longer period, for the adaptation to the heating temperature or the heating period for the pre-crystallization as described above.

<Crystallization Step>

In the crystallization step, the film that includes the polymer (A) is heated (annealed) by contacting a principal plane of the film that includes the polymer (A) with a surface of a heating member that permits releasability of the film to obtain a crystallized polymer film having a crystallinity of from 20% to 80%.

The preferred range of the heating temperature (heating temperature T) and the heating member in the step are as described above.

In the step, any heating method may be used as long as the method can heat the film by the contact process as described above. For example, in a case in which the heating member is a heated roll, a known roll-to-roll heating method is suitable.

In the step, the film that includes the polymer (A) is preferably heated at a temperature T (°C) that satisfies the following Formula (a):

$$\text{Formula (a): } Tg + 30 < T < Tm - 20$$

[In Formula (a), Tg represents the glass transition temperature (°C) of the polymer (A) as measured by a DSC method, and Tm represents the melting point (°C) of the polymer (A).]

As used herein, the glass transition temperature Tg [°C] of the polymer (A) is obtained as the inflection point in a melting endotherm curve obtained by heating the polymer (A) at a temperature increase rate of 10°C/min using a differential scanning calorimeter (DSC), and the melting point Tm [°C] of the polymer (A) is the temperature (Tm) at the peak of the melting endotherm.

Satisfaction of the relationship of "Tg + 30 <T" in Formula (a) allows a more efficient crystallization.
Satisfaction of the relationship of the right-hand member "T < Tm - 20" in Formula (a) allows prevention of non-uniformity of physical properties of the film due to adhesion to the contact regions and deformation due to softening.
In the step, the heating temperature (temperature T) is preferably from 80°C to 160°C and more preferably from 100°C to 155°C.
In the step, the heating period is preferably from a second to 60 minutes, more preferably from a second to 300 seconds, and still more preferably from a second to 60 seconds.
In a case in which the film is heated for a period of more than 60 minutes, spherocrystals might be grown from the molecular chains in the amorphous portions at a temperature higher than the glass transition temperature of the polymer (A), thereby reducing orientation. This might result in reduced piezoelectricity and reduced transparency.
In the step, the heated film is preferably cooled to obtain a crystallized polymer film.
Examples of a method for cooling the film include "rapidly cooling".
As used herein, "rapidly cooling" refers to cooling of the heated film immediately after heating, by, for example, immersing the film in ice water to cool the film to a temperature at least equal to or lower than the glass transition temperature Tg of the polymer (A), provided that no other treatments are performed between the heating and, for example, the immersion in ice water.
Examples of a method for rapidly cooling the film include immersion of the heated film in a refrigerant such as water, ice water, ethanol, ethanol or methanol with dryice, or liquid nitrogen and generation of latent heat of evaporation by spraying the heated film with liquid having a low vapor pressure.
To continuously cool the film, the film can be cooled by contacting the film with a cooling roll (for example, a metal roll) that is controlled at a temperature equal to or lower than the glass transition temperature Tg of the polymer (A) (for example, 60°C or less).
The film may be cooled only once or two times or more.
In the crystallization step, cycles of heating and cooling may be alternated.

<Particularly Preferred Aspect of Production Method>

A particularly preferred aspect of the production method includes a step of obtaining a pre-crystallized film that includes the polymer (A) and a step of stretching the pre-crystallized film mainly in a uniaxial direction in the preparation step.
In the aspect, the film is pre-crystallized before stretching the film to form crystals (fine crystals), and then the film is stretched.
The aspect allows for efficient application of force that is applied to the film during stretching to polymer portions having a low crystallinity between the fine crystals. Thus, this allows for efficient orientation of the polymer (A) toward a main stretching direction.
Specifically, oriented fine crystals are generated in the polymer portions having a low crystallinity between the fine crystals during stretching. At the same time, the spherocrystals generated by the pre-crystallization are disrupted, and the crystal lamellae that constitute the spherocrystals are oriented in the stretching direction in a row connected by tie-molecular chains.
For the aspect, you can see, for example, the method described in the paragraphs of 0066-0091 of WO 2013/054918.
In a case in which the crystallized polymer film is used as a piezoelectric film, the production method in the aspect is suitable, as the method can produce a crystallized polymer film having low haze and a low rate of dimensional change without significantly reducing the piezoelectric constant.
For example, the method is suitable, as the method allows easy adjustment of the MORc, the crystallinity, and the product of the MORc and the crystallinity of the crystallized polymer film (their desired range are described above) in desired ranges, which are described above.

[Examples]

Now, the embodiments of the invention will be described more specifically with reference to examples, but the embodiments are not limited to the examples without departing from the spirit of the invention.

[Example 1]

<Production of Crystallized Polymer Film>

A polylactic acid-type polymer from NatureWorks LLC (trade name: Ingeo™ biopolymers, model number: 4032D,

weight-average molecular weight Mw: 200,000, melting point (Tm): 166°C, glass transition temperature (Tg): from 57 to 60°C) as the polymer (A) was prepared as a raw material.

The material was placed into a hopper of an extruder. The material was extruded from a T die, while the material is heated to a temperature of from 220°C to 230°C. The extrudate was contacted with a casting roll at 55°C for 0.5 minutes to give a pre-crystallized film having a thickness of 150 μm (preparation step). The crystallinity of the pre-crystallized film was measured to be 5.63%.

The resultant pre-crystallized film was uniaxially stretched between rolls to obtain a stretched film (stretching step).

More particularly, while the pre-crystallized film is heated to 71°C, the film was uniaxially stretched at a stretching rate of 1650 mm/min and a stretching rate of 3.6 in the MD direction in a roll-to-roll system to give a stretched film. In the stretching step, the pre-crystallized film was fed at a rate of 3 m/min. The resultant stretched film had a thickness of 52.0 μm.

In a roll-to-roll system, the resultant stretched film was heated by passing the film over a heated roll (heating member) at 145°C over a period of 60 seconds and then cooled by passing the film over a cooling roll at 60°C to obtain a crystallized polymer film. (The above procedures are the "crystallization step".) In the heating step, a principal plane of the stretched film was contacted with a surface of the heated roll.

The heated roll used in the crystallization step was produced in the following manner:

-Production of Heated Roll -

According to routine procedures, a surface of a steel roll that mainly included chromium-molybdenum steel was plated with hard chrome and then blasted. On the surface, a polytetrafluoroethylene (PTFE) layer was formed as a surface layer to complete the heated roll.

<Measurement and Evaluation>

The polymer (A), the heated roll, and the crystallized polymer film were measured and evaluated as described below.

The results are illustrated in Table 1 and Table 2.

(Mw, Mw/Mn, Optical Purity, and Chirality of Polymer (A))

The Mw, the Mw/Mn, the optical purity, and the chirality of the polymer (A) were measured in the same manner as the manner described in the paragraphs 0126-0128 of WO 2013/054918.

The polymer (A) in Example 1 had a Mw of 200,000, a Mw/Mn of 1.87, an optical purity of 97.5% ee, and an L chirality.

(Crystallization Half Time of Polymer (A) at Temperature at which Polymer (A) Crystallizes Fastest)

The polymer (A) was dried at 110°C under vacuum for 16 hours and molded using an injection molding machine (M-70B from MEIKI CO.,LTD.) at a cylinder temperature of 285°C and a mold temperature of 10°C to obtain a preform having a mass of 32 g.

The neck of the preform was cut into a measurement sample (10 mg), and the "temperature at which the polymer (A) crystallizes fastest" and the "crystallization half time of the polymer (A) at the temperature at which the polymer (A) crystallizes fastest" were measured in the following manner, using a differential scanning calorimeter (under the trade name of DSC 7) from Perkin-Elmer Corp.

- Temperature at which Polymer (A) Crystallizes Fastest-

The neck of the preform was cut into a sample (10 mg) for measurement of the "temperature at which the polymer (A) crystallizes fastest". The measurement sample was heated from room temperature to 230°C at a temperature increase rate of 320°C/min and then rapidly cooled to 50°C at a cooling rate of 500°C/min. This made the measurement sample substantially crystal-free. Then, the measurement sample was heated at a temperature increase rate of 10°C/min. In the second heating process, the temperature at which the crystallization peak was observed was recorded, and the recorded temperature was considered as the temperature at which the polymer (A) crystallizes fastest. The temperature at which the polymer (A) crystallizes fastest was in a range from 110°C to 125°C.

- Crystallization Half Time of Polymer (A) at Temperature at which Polymer (A) Crystallizes Fastest -

The neck of the preform is cut into a sample (10 mg) for measurement of the "crystallization half time of the

polymer (A) at the temperature at which the polymer (A) crystallizes fastest". The measurement sample was heated from room temperature to 230°C at a temperature increase rate of 320°C/min and then rapidly cooled to 50°C at a cooling rate of 500°C/min. This made the measurement sample substantially crystal-free. Then, the measurement sample was heated to 117°C, which is the approximately middle value of the temperature range in which the polymer crystallizes fastest, at a temperature increase rate of 320°C/min. And the measurement sample was maintained at 117°C, and the crystallization exotherm was recorded. Based on the recorded exotherm, a period of time required for the polymer to exhibit half the total exotherm was determined, and the period was considered as the crystallization half time (seconds) of the polymer (A) at the temperature at which the polymer (A) crystallizes fastest (see Table 1 below).

(Evaluation of Ability for Surface of Heated Roll to Permit Releasability of Film)

The ability for a surface of the heated roll (the surface of the surface layer in Example 1) to permit releasability of the film was evaluated in the manner described above. The surface that exhibited the ability was rated as "A", while the surface that did not exhibit the ability was rated as "B".

(Measurement of Roughness (Rz and Ra) of Surface of Heated Roll)

A surface of the heated roll (the surface of the surface layer in Example 1) was measured for maximum height Rz and arithmetic mean roughness Ra in accordance with JIS B 0601 (2001).

(Measurement of Crystallinity of Crystallized Polymer Film)

The crystallized polymer film was cut into a 10 mg sample. The sample was measured at a temperature increase rate of 10°C/min using a differential scanning calorimeter (DSC-1 from Perkin-Elmer Corp.), and the melting endotherm curve was obtained. The crystallinity was determined from the resultant melting endotherm curve.

(Measurement of Elastic Moduli (TD and MD) of Crystallized Polymer Film)

The crystallized polymer film was measured for tensile elastic modulus (TD) in the TD direction and tensile elastic modulus (MD) in the MD direction in accordance with JIS-K-7127.

(Calculation of Emax/Emin)

Based on the measured elastic moduli (TD and MD), the ratio of the maximum tensile elastic modulus Emax to the minimum tensile elastic modulus Emin (Emax/Emin) was determined.

(Measurement of Total Haze of Crystallized Polymer Film)

The crystallized polymer film was measured for total haze under the following conditions:

- Conditions for Measuring Total Haze -

Measurement Device: HAZE METER TC-HIIIDPK from Tokyo Denshoku. Co., Ltd.
Sample Size: width of 30 mm × length of 30 mm (For thickness, see Table 2.)
Measurement Conditions: conditions in accordance with JIS-K7105
Measurement Temperature: room temperature (25°C)

(Measurement of Internal Haze of Crystallized Polymer Film)

The haze of a laminated body constituted by silicone oil placed between two quartz glass plates (hereinafter also referred to as "haze H2") and the haze of a laminated body constituted by a crystallized polymer film that had a surface uniformly covered with silicone oil and that was sandwiched between two quartz glass plates (hereinafter also referred to as "haze H3 ") were measured in the same manner as for the total haze.

Then, the internal haze H1 was determined with the following formula:

$$\text{Internal haze (H1)} = \text{Haze (H3)} - \text{Haze (H2)}$$

(Calculation of Haze Difference)

The internal haze was subtracted from the total haze to calculate the difference between the total haze and the internal haze (haze difference, i.e. surface haze).

(Piezoelectric Constant)

The crystallized polymer film was measured for piezoelectric constant (particularly, piezoelectric constant $d_{14}$ (by the stress-charge method)) according to the "example of a method for measuring the piezoelectric constant $d_{14}$ using a stress-charge method" as described above.

[Examples 2 and 3]

Crystallized polymer films were produced in the same manner as in Example 1 except that the conditions for producing the crystallized polymer films were changed as illustrated in Table 1 below, and the films were measured and evaluated in the same manner as in Example 1.

The results are illustrated in Table 1 and Table 2.

[Comparative Example 1]

"PALGREEN LC" biaxially stretched polylactic acid film from Mitsui Chemicals Tohcello. Inc. was measured and evaluated in the same manner as in Example 1.

The results are illustrated in Table 1 and Table 2.

[Comparative Example 2]

"A-PET" PET film (un-stretched) from Teijin Ltd. was measured and evaluated in the same manner as in Example 1.

The results are illustrated in Table 1 and Table 2.

[Comparative Example 3]

"A-PET" PET film (uniaxially stretched) from Teijin Ltd. was measured and evaluated in the same manner as in Example 1. The film was produced by uniaxially stretching in a batch process.

The results are illustrated in Table 1 and Table 2.

[Comparative Example 4]

"LUMIRROR S10" PET film from Toray Industries Inc. was measured and evaluated in the same manner as in Example 1.

The results are illustrated in Table 1 and Table 2.

[Comparative Example 5]

A crystallized polymer film was produced in the same manner as in Example 1 except that the heated roll in Example 1 was changed to a heated roll produced in the following manner and that the conditions for producing the crystallized polymer film were changed as illustrated in Table 1 below.

The results are illustrated in Table 1 and Table 2.

- Production of Heated Roll in Comparative Example 5 -

The heated roll in Comparative Example 5 was produced in the same manner as for the heated roll in Example 1 except that the surface was not blasted and that a PTFE layer was not formed.

The resultant heated roll in Comparative Example 5 had a surface of a hard-chrome plating layer that has an Rz and an Ra illustrated in Table 1.

[Table 1]

| | Polymer (A) | | | Stretching Conditions | | | | | Crystallization Conditions | | | | | | | Cooling Conditions |
|---|---|---|---|---|---|---|---|---|---|---|---|---|---|---|---|
| | | | | | | | | | Heated Roll | | | | | | |
| | Type | Mw | Crystallization Half Time (Seconds) | Method | Stretching Ratio (TD) | Stretching Ratio (MD) | Temperature (°C) | Width (mm) | Material of Surface | Ability for Surface to Permit Releasabilty | Rz of Surface (μm) | Ra of Surface (μm) | Temperature (°C) | Time Period (Seconds) | |
| Ex. 1 | PLA | 200,000 | 529 | Uniaxial Stretching between Rolls | 1.0 | 3.6 | 71 | 630 | PTFE | A | 1.04 | 0.18 | 145 | 60 | 60°C |
| Ex. 2 | PLA | 200,000 | 529 | Uniaxial Stretching between Rolls | 1.0 | 4.0 | 75 | 630 | PTFE | A | 1.04 | 0.18 | 130 | 60 | 30°C |
| Ex. 3 | PLA | 200,000 | 529 | Uniaxial Stretching between Rolls | 1.0 | 3.7 | 70 | 630 | PTFE | A | 1.04 | 0.18 | 130 | 60 | Rapidly cooling |
| Comp. Ex. 1 | PLA | NA | 1215 | Sequential Biaxial Stretching | NA | NA | NA | NA | NA | NA | NA | NA | NA | NA | NA |
| Comp. Ex. 2 | PET | NA | 120 | (Un-stretched) | - | - | - | 200 | - | - | - | - | - | - | - |
| Comp. Ex. 3 | PET | NA | 120 | Batch Stretching | - | 2.5 | 90 | 150 | - | - | - | - | - | - | Rapidly cooling |
| Comp. Ex. 4 | PET | NA | 51 | Sequential Biaxial Stretching | NA | NA | NA | NA | NA | NA | NA | NA | NA | NA | NA |
| Comp. Ex. 5 | PLA | 200,000 | 529 | Uniaxial Stretching between Rolls | 1.0 | 3.6 | 65 | 630 | Chrome Plating | B | 0.09 | 0.01 | 130 | 60 | 40°C |

[Table 2]

| | Crystallinity (%) | Thickness (μm) | Tensile elastic modulus (TD) (GPa) | Tensile elastic modulus (MD) (GPa) | Emax./Emin. | Total Haze (%) | Internal Haze (%) | Haze Difference (%) | Piezoelectric Constant (pC/N) |
|---|---|---|---|---|---|---|---|---|---|
| Ex. 1 | 42.0 | 52.0 | 3.03 | 5.94 | 1.96 | 0.8 | 0.1 | 0.7 | 6.2 |
| Ex. 2 | 44.0 | 56.0 | 3.08 | 6.32 | 2.05 | 1.1 | 0.8 | 0.3 | 6.3 |
| Ex. 3 | 45.0 | 52.0 | 3.05 | 5.32 | 1.74 | 1.0 | 0.2 | 0.8 | 5.6 |
| Comp. Ex. 1 | 43.0 | 25.0 | 3.30 | 3.60 | 1.09 | 7.9 | 6.4 | 1.5 | 6.0 |
| Comp. Ex. 2 | 43.0 | 400.0 | 2.20 | 2.10 | 1.05 | 8.8 | 6.8 | 2.0 | 0.0 |
| Comp. Ex. 3 | 13.0 | 199.0 | 2.13 | 3.63 | 1.70 | 4.1 | 2.4 | 1.7 | 0.0 |
| Comp. Ex. 4 | 44.0 | 99.0 | 4.71 | 5.21 | 1.11 | 85.4 | 10.9 | 74.5 | 0.0 |
| Comp. Ex. 5 | 45.0 | 48.0 | 3.15 | 5.49 | 1.74 | 2.3 | 1.3 | 1.0 | 5.5 |

As illustrated in Table 1 and Table 2, the crystallized polymer films of Examples 1-3 had a difference between a total haze and an internal haze of 0.8% or less. Thus, the crystallized polymer films of Examples 1-3 had a reduced surface haze (it is difficult to increase the uniformity of surface haze across a surface). The results show that the crystallized polymer films of Examples 1-3 can be expected to have an increased uniformity of the total haze across a surface.

The disclosure of Japanese Patent Application No. 2013-150892 filed on July 19, 2013 is herein incorporated by reference in its entireties.

All publications, patent applications, and technical specifications described herein are herein incorporated by reference to the same extent as if individual publication, patent application, and technical specification were specifically and individually indicated to be incorporated by reference.

## Claims

1. A crystallized polymer film comprising a polymer (A) that has a weight-average molecular weight of from 50,000 to 1,000,000 and a crystallization half time at the temperature at which the polymer crystallizes fastest in a range of from 180 seconds to 900 seconds,
having a crystallinity of from 20% to 80% as obtained by a DSC method, and
having a difference between a total haze and an internal haze of 0.8% or less in a case in which the total haze and the internal haze are measured at 25°C in accordance with JIS-K7105.

2. The crystallized polymer film according to Claim 1, the film having a total haze of 40% or less.

3. The crystallized polymer film according to Claim 1 or Claim 2, the film having a ratio of the maximum tensile elastic modulus Emax of an tensile elastic modulus (TD) in the TD direction and an tensile elastic modulus (MD) in the MD direction to the minimum tensile elastic modulus Emin of from 1.30 to 2.50,
in a case in which the tensile elastic modulus (TD) and the tensile elastic modulus (MD) are measured in accordance with JIS-K-7127.

4. The crystallized polymer film according to Claim 1 or Claim 2, the film having an internal haze of 20% or less and a piezoelectric constant $d_{14}$ of 1 pC/N or more as measured at 25°C using a stress-charge method.

5. The crystallized polymer film according to Claim 1 or Claim 2, the film having an internal haze of 1% or less.

6. The crystallized polymer film according to Claim 1 or Claim 2, wherein the polymer (A) is a polylactic acid-type polymer that has a main chain having a repeating unit represented by the following Formula (1):

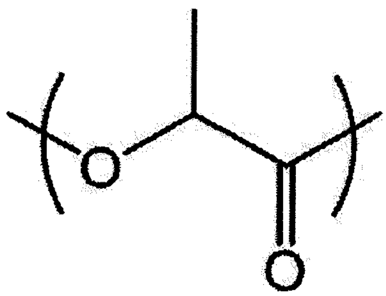

(1)

.

7. The crystallized polymer film according to Claim 1 or Claim 2, wherein the polymer (A) has an optical purity of 95.00% ee or more.

8. The crystallized polymer film according to Claim 1 or Claim 2, the film comprising the polymer (A) in an amount of 80% by mass or more.

9. The crystallized polymer film according to Claim 1 or Claim 2, the film being obtained by contacting a principal plane of the film that includes the polymer (A) with a surface of a heating member that permits releasability of the film to heat the film.

**10.** A method for producing the crystallized polymer film according to Claim 1 or Claim 2, the method comprising
a step of preparing a film that includes the polymer (A), and
a crystallization step of heating the film at a temperature T (°C) that satisfies the following Formula (a) by contacting a principal plane of the film with a surface of a heating member that permits releasability of the film to obtain the crystallized polymer film:

$$\text{Formula (a): } Tg + 30 < T < Tm - 20$$

[wherein Tg represents the glass transition temperature (°C) of the polymer (A) as measured by a DSC method, and Tm represents the melting point of the polymer (A).]

**11.** The method for producing the crystallized polymer film according to Claim 10, wherein the heating member has a surface layer that comprises a fluororesin and that is in contact with the principal plane.

**12.** The method for producing a crystallized polymer film according to Claim 10, wherein the surface of the heating member has a maximum height Rz of 0.20 $\mu$m or more.

**13.** The method for producing the crystallized polymer film according to Claim 10, wherein the surface of the heating member has an arithmetic mean roughness Ra of 0.05 $\mu$m or more.

**14.** The method for producing the crystallized polymer film according to Claim 10, wherein the preparation step is to prepare a film that includes the polymer (A) and that is stretched mainly in a uniaxial direction.

**15.** The method for producing the crystallized polymer film according to Claim 10, wherein the preparation step is to prepare a pre-crystallized film that includes the polymer (A).

**16.** The method for producing the crystallized polymer film according to Claim 10, wherein the preparation step comprises a step of obtaining a pre-crystallized film that includes the polymer (A) and a step of stretching the pre-crystallized film mainly in a uniaxial direction.

**INTERNATIONAL SEARCH REPORT**

International application No.
PCT/JP2014/069100

A. CLASSIFICATION OF SUBJECT MATTER
*C08J5/18*(2006.01)i

According to International Patent Classification (IPC) or to both national classification and IPC

B. FIELDS SEARCHED

Minimum documentation searched (classification system followed by classification symbols)
C08J5/18

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2014 |
| Kokai Jitsuyo Shinan Koho | 1971-2014 | Toroku Jitsuyo Shinan Koho | 1994-2014 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | WO 2013/054918 A1 (Mitsui Chemicals, Inc.), 18 April 2013 (18.04.2013), claims; examples & EP 2672539 A1 | 1-16 |
| A | WO 2010/104196 A1 (Mitsui Chemicals, Inc.), 16 September 2010 (16.09.2010), claims; examples & EP 2408034 A1 | 1-16 |

☐ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 10 October, 2014 (10.10.14) | 21 October, 2014 (21.10.14) |

| Name and mailing address of the ISA/ | Authorized officer |
|---|---|
| Japanese Patent Office | |
| Facsimile No. | Telephone No. |

Form PCT/ISA/210 (second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2012180512 A
- JP H05152638 A
- JP 2011162713 A
- JP 2012235086 A
- JP S59096123 A
- JP H07033861 A
- US 2668182 A
- US 4057357 A
- WO 2013054918 A
- JP 2013150892 A